# EUROPÄISCHE PATENTSCHRIFT

(11) **EP 1 747 610 B1**
(45) Veröffentlichungstag und Bekanntmachung des Hinweises auf die Patenterteilung: **19.08.2009**
(21) Anmeldenummer: 05740287.7
(22) Anmeldetag: 07.05.2005
(51) Int. Cl.: H02K 7/18, H02K 21/22, H02K 23/52, H02K 23/64, H02K 13/14

(54) **STARTVORRICHTUNG FÜR STROMERZEUGER ALS EINHEIT AUS VERBRENNUNGSMOTOR UND GENERATOR**
STARTING DEVICE FOR AN ELECTRIC POWER GENERATOR AS A UNIT CONSISTING OF AN INTERNAL COMBUSTION ENGINE AND A GENERATOR
DISPOSITIF DE DEMARRAGE POUR GENERATEUR DE COURANT SE PRESENTANT SOUS FORME D'UNITE CONSTITUEE D'UN MOTEUR A COMBUSTION INTERNE ET D'UNE GENERATRICE

(30) Priorität: 21.05.2004 DE 102004024976
(43) Veröffentlichungstag der Anmeldung: 31.01.2007
(73) Patentinhaber: Motorenfabrik Hatz GmbH & Co. KG, 94099 Ruhstorf (DE)
(72) Erfinder: HATZ, Ernst, 94099 Ruhstorf/Rott (DE); MOSER, Franz, A-4784 Schardenberg (AT)
(74) Vertreter: Grättinger Möhring von Poschinger Patentanwälte Partnerschaft
(86) Internationale Anmeldenummer: PCT/EP2005/004969
(87) Internationale Veröffentlichungsnummer: WO 2005/114815

(56) Entgegenhaltungen:
- DE-A1- 10 018 467
- DE-A1- 10 228 225
- US-A- 5 001 412

## Beschreibung

Die vorliegende Erfindung betrifft nach ihrer Gattung eine Startvorrichtung für einen Stromerzeuger, welcher eine funktionelle und strukturelle Einheit aus Verbrennungsmotor und Generator, insbesondere aus Dieselmotor und Synchrongenerator, bildet. Bei solchen Stromerzeugern, wie z.B. demjenigen aus der DE 102 28 225 A1, ist der Rotor des Generators mit der Kurbelwelle des Verbrennungsmotors drehfest gekoppelt.

Verbrennungsmotoren müssen durch eine besondere Startvorrichtung gestartet werden, da sie nicht wie Elektromotoren aus eigener Kraft anlaufen können. Dabei sind erhebliche Widerstände aufgrund von Verdichtung, Kolbenreibung und Lagerreibung zu überwinden, die stark von der Bauart und der Zylinderzahl des Verbrennungsmotors, sowie von den Schmiermitteleigenschaften und der Motortemperatur abhängen. Damit beim Ottomotor das zum Selbstlauf notwendige Luft-Kraftstoff-Gemisch gebildet bzw. beim Dieselmotor die Selbstzündungstemperatur erreicht werden kann, muss die Startvorrichtung den Verbrennungsmotor mit einer Mindestdrehzahl (Startdrehzahl) durchdrehen und nach den ersten Zündungen beim Hochlaufen auf die Mindest-Selbstdrehzahl unterstützen. Zum Starten von Verbrennungsmotoren werden im allgemeinen Elektromotoren verwendet.

Herkömmliche Startvorrichtungen umfassen neben dem Elektromotor für gewöhnlich ein mit einem Einrückrelais kombiniertes, mit der Ankerwelle des Elektromotors drehfest gekoppeltes Ritzel, welches mit einem Zahnkranz am Motorschwungrad zusammenwirkt. Zum Anlassen des Verbrennungsmotors soll das Ritzel zunächst am Zahnkranz einwandfrei einspuren, dann das zum Drehen des Motorschwungrads erforderliche Drehmoment übertragen und schließlich zum richtigen Zeitpunkt wieder ausspuren. Um zu verhindern, dass der Verbrennungsmotor das Ritzel antreibt, wenn die Drehzahl der Kurbelwelle die Drehzahl der Ankerwelle des Elektromotors überschreitet, sind herkömmliche Starter im allgemeinen mit einem Freilauf versehen, welcher bewirkt, dass die drehfeste Verbindung zwischen Ritzel und Ankerwelle des Elektromotors gelöst wird.

Nachteilig bei den im Stand der Technik bekannten Startvorrichtungen ist vor allem die Tatsache, dass diese ein separates Bauteil darstellen, welches abhängig von Bauart und Bauform der Startvorrichtung in erheblichem Umfang Platz beansprucht. Dies gilt insbesondere für Starter, welche in ihren Leistungen für groß dimensionierte Verbrennungsmotoren, insbesondere stationäre Dieselmotoren, auszulegen sind.

Weiterhin sind Ritzel und Zahnkranz bei der Übertragung des Drehmoments auf das Schwungrad in hohem Maße durch mechanischen Verschleiß gefährdet. So ist zur Vermeidung von erhöhtem Verschleiß stets für ein einwandfreies Ein- und Ausspuren des Ritzels zu sorgen, zu welchem Zweck Ritzel und Zahnkranz mit einem hierfür vorteilhaften Evolventen-Profil versehen werden, und die Zähne von Ritzel und Zahnkranz oftmals zusätzlich an der Stirnseite angeschrägt werden. Abgesehen davon, dass selbst diese Maßnahmen nicht immer zum gewünschten Erfolg führen, sind sie mit einer aufwändigen und vergleichsweise teueren Fertigungsprozedur verbunden. Zudem ist es notwendig, dass für eine erhöhte Lebensdauer von Ritzel und Zahnkranz geeignete Werkstoffe gewählt werden müssen, was wiederum mit vergleichsweise hohen Materialkosten verbunden ist.

Der Freilauf, welcher oft als Rollenfreilauf, als Lamellenfreilauf oder als Stirnzahnfreilauf ausgeführt ist, ist eine mechanisch komplizierte Einrichtung, die verschleißanfällig ist und bei der Herstellung nicht unerhebliche Kosten verursacht.

Wird der Startvorgang wiederholt, weil der Verbrennungsmotor nicht gestartet werden konnte, muss der Starteranker rasch wieder zum Stillstand gebracht werden, da ansonsten eine Beschädigung der Startvorrichtung nicht auszuschließen ist. Eine Fehlbedienung der Startvorrichtung durch zeitlich kurz aufeinanderfolgende Startversuche, bei welchen in den sich noch drehenden Startanker "hineingestartet" wird, ist bei herkömmlichen Startvorrichtungen jedoch nicht ausgeschlossen. Um eine solche Fehlbedienung zu vermeiden, können spezielle Bremswicklungen eingebaut werden, die nach dem Ausschalten des Starters parallel zu dem noch umlaufenden Starteranker geschaltet werden und als Strombremse wirken. Eine solche Vorkehrung verteuert jedoch die Herstellkosten der Startvorrichtung und kommt schon aus diesem Grund oft nicht in Frage. Noch kritischer ist ein Startvorgang in den sich drehenden Verbrennungsmotor bei ausgespurtem Ritzel hinein, da das Ritzel bei der erneuten Starterbetätigung aufgrund des laufenden Motors keine formschlüssige mechanische Verbindung vorfinden kann und es somit zu einer Beschädigung der Verzahnung kommen kann.

Ein weiterer Nachteil der im Stand der Technik bekannten Startvorrichtungen liegt darin, dass bei den eingesetzten Elektromotoren, sehr hoch induktive Ströme am Kommutator gewendet bzw. geschaltet werden müssen. Das Abschalten von hoch induktiven Strömen ist jedoch ein äußerst problematisches Unterfangen, da in den Magnetfeldern der Spulen viel Energie gespeichert ist, welche sich ohne besondere Vorkehrungen beim Abschalten des Stroms als Funkenschlag an dem Kommutator entlädt und diesen sogar zerstören kann. Um eine solche Funken zu vermeiden, werden die Ankerwicklungen sehr fein unterteilt, so dass eine einzelne Wicklung nur mehr sehr wenige Windungen besitzt. Dementsprechend müssen technisch aufwändige, fein unterteilte Kommutatoren zur Stromwendung eingesetzt werden, was zu vergleichsweise hohen Kosten bei der Herstellung der Elektromotoren führt. Zusätzlich können weitere Kommutationshilfen vorgesehen sein, welche die Kosten der Herstellung des Elektromotors weiter verteuern.

Aus der US 5,001,412 ist ferner eine Einheit aus Verbrennungsmotor und Generator bekannt, bei welcher die elektromotorisch realisierte Startvorrichtung für den Verbrennungsmotor - wie auch der Startermotor aus der DE 10018467 A1 - in nachteiliger Art zwingend auf eine Kommutierungseinrichtung mit Bürsten- bzw. Schleifkontakten angewiesen ist.

Die Aufgabe der vorliegenden Erfindung besteht darin, eine Startvorrichtung für einen Stromerzeuger als Einheit aus Verbrennungsmotor und Generator zur Verfügung zu stellen, durch welchen die eingangs genannten Nachteile der herkömmlichen Startvorrichtungen vermieden werden können.

Diese Aufgabe wird erfindungsgemäß durch eine Startvorrichtung gemäß Anspruch 1 gelöst. Vorteilhafte Ausgestaltungen der Erfindung sind durch die Merkmale der Unteransprüche angegeben.

Erfindungsgemäß umfasst die Startvorrichtung für einen Stromerzeuger als Einheit aus Verbrennungsmotor und Generator, bei welchem der Rotor des Generators mit der Kurbelwelle des Verbrennungsmotors drehfest gekoppelt ist, wenigstens eine Startspule, welche auf dem Rotor oder Stator des Generators angeordnet sein kann, wenigstens einen mit einem Spulenmagnetfeld der bestromten Startspule zusammenwirkenden Startmagneten, der auf dem Rotor oder Stator angeordnet sein kann, jedoch auf dem Rotor angeordnet ist, wenn die Startspule auf dem Stator angeordnet ist, bzw. auf dem Stator angeordnet ist, wenn die Startspule auf dem Rotor angeordnet ist, , wenigstens einen stationären Spulenstromschalter mit zwei Schaltzuständen zum Verbinden der Startspule mit oder Trennen der Startspule von einer Stromquelle, und wenigstens ein auf dem Rotor drehfest angeordnetes Schalterbetätigungsmittel, welches mit dem Spulenstromschalter magnetisch zusammenwirkt und geeignet ist, den Spulenstromschalter in Abhängigkeit von der Rotorwinkellage in einen seiner beider Schaltzustände zu schalten.

Die erfindungsgemäße Startvorrichtung wird in vorteilhafter Weise in den Generator integriert, so dass im Vergleich zu herkömmlichen Startvorrichtungen Platz eingespart wird. Zudem werden Material und Kosten eingespart, da Elemente des Generators, wie Stator und Rotor, auch für den Elektromotor der Startvorrichtung eingesetzt werden können. Besonders vorteilhaft erweist sich die Tatsache, dass das Drehmoment des Elektromotors der Startvorrichtung über den Rotor des Generators direkt auf die Kurbelwelle des Verbrennungsmotors übertragen wird, so dass auf die herkömmliche Kombination aus Ritzel und am Schwungrad des Verbrennungsmotors angebrachten Zahnkranz verzichtet werden kann. Das Startmoment wird berührungslos und gänzlich verschleißfrei elektro-magnetisch übertragen. Ein etwaiger Neustart der Startvorrichtung in den noch laufenden Motor hinein ist unproblematisch und führt im Unterschied zu der herkömmlichen Startvorrichtungen nicht zu einer Beschädigung der Startvorrichtung. Vielmehr kann die Startvorrichtung zu jedem Zeitpunkt und in jedem Betriebszustand der Startvorrichtung und des Verbrennungsmotors ohne Gefahr einer Beschädigung betätigt werden. Die Kommutierung des Stroms erfolgt ohne Einsatz eines herkömmlichen Kommutators lediglich durch phasenrichtiges Bestromen der Startspulen.

Bei einer vorteilhaften Ausgestaltung der erfindungsgemäßen Startvorrichtung ist der Spulenstromschalter mit einem entgegen einer rückstellenden Kraft verschiebbaren Schaltmagneten ausgerüstet, durch dessen Verschiebung der Spulenstromschalter geschaltet wird. Das Schalterbetätigungsmittel ist in Form eines plattenförmigen Elements aus einem magnetischen oder ferromagnetischen Material, insbesondere Eisen, ausgeführt, welches mit einer Drehung des Rotors in eine Lage relativ zum Schaltmagneten des Spulenstromschalters gebracht werden kann, in der der Schaltmagnet durch die magnetische Wechselwirkung mit dem plattenförmigen Element angezogen und dadurch bewegt wird, so dass der Spulenstromschalter geschaltet wird. Um eine ausreichende magnetische Wechselwirkung zwischen dem Schaltmagneten und dem plattenförmigen Element zu ermöglichen, wird die Startvorrichtung praktischerweise so ausgelegt, dass sich die einander gegenüberliegenden Flächen von plattenförmigem Element und Schaltmagnet in der Projektion in axialer Richtung in einem bestimmten Umfang überlappen müssen, um eine Verschiebung des Schaltmagneten herbeizuführen.

Für das weitere wird angenommen, dass der Spulenstromschalter bei Betätigung durch das plattenförmige Element, d. h. bei einer ausreichenden magnetischen Wechselwirkung zwischen dem Schaltmagneten und dem plattenförmigen Element, in einen "geschlossenen" Schaltzustand gebracht wird, bei dem die Startspule mit der Stromquelle verbunden ist, so dass die Startspule bestromt wird..Dieser Schaltzustand des Spulenstromschalters wird solange aufrecht erhalten, wie das plattenförmige Element aufgrund seiner anziehenden magnetischen Wechselwirkung mit dem Schaltmagneten in der Lage ist, den Schaltmagneten in seiner verschobenen Lage zu halten. Der Schaltvorgang des Spulenstromschalters mit Übergang in seinen geschlossenen Schaltzustand kann beispielsweise so ausgelegt sein, dass die einander gegenüberliegenden Flächen von plattenförmigem Element und Spulenstromschalter in der Projektion in axialer Richtung eine Überlappung von wenigstens ca. 70% aufweisen müssen. Umgekehrt heißt dies, dass bei einer geringeren Überlappung keine ausreichende anziehende magnetische Wechselwirkung zwischen dem plattenförmigen Element und dem Schaltmagneten zum Bewegen des Schaltmagneten und zum Schalten des Spulenstromschalters vorliegt, so dass der Spulenstromschalter in seinen "offenen" Schaltzustand übergeht, in welchem die Startspule nicht bestromt ist. Alternativ hierzu kann der Spulenstromschalter so ausgelegt werden, dass er bei einer ausreichenden magnetischen Wechselwirkung zwischen dem Schaltmagneten und dem plattenförmigen Element zum Verschieben des Schaltmagneten in seinen offenen Schaltzustand überführt wird, bei welchem die Startspule von der Stromquelle getrennt ist, und umgekehrt.

Bei einer vollumfänglichen Drehung des Rotors wird der Spulenstromschalter also wenigstens zweimal geschaltet, nämlich zum ersten Mal, indem er für einen vorgebbaren Winkelbereich der ausreichenden Überlappung der einander gegenüberliegenden Flächen von Schaltmagnet und plattenförmigem Element in seinen geschlossenen Schaltzustand gebracht wird, bei welcher die Startspule mit der Stromquelle verbunden ist, und das zweite Mal, indem er außerhalb dieses vorgebbaren Winkelbereichs seinen offenen Schaltzustand einnimmt, bei welcher die Startspule von der Stromquelle getrennt ist. In besonderes vorteilhafter Weise kann auf einen herkömmlichen Kommutator zum Stromwenden verzichtet werden, da die Startspule durch bloßes Schließen und Öffnen des Spulenstromschalters phasenrichtig mit der Stromquelle verbunden bzw. von dieser getrennt werden kann. Bei mehreren Startspulen ist es besonders bevorzugt, wenn mehrere Startspulen gleichzeitig bestromt sind, um zeitweilig ein summarisches Moment zu erzielen.

Das plattenförmige Element ist vorteilhaft in Form wenigstens eines Scheibensegments ausgeführt.

Bei einer weiteren vorteilhaften Ausgestaltung der Erfindung weist der Rotor eine radiale Führung für das plattenförmige Element auf, in welcher das plattenförmige Element in radialer Richtung bewegbar geführt ist. Zudem ist der Rotor mit wenigstens einem elastischen Federmittel ausgerüstet, welches mit seinem einen Ende am Rotor und mit seinem anderen Ende an dem plattenförmige Element befestigt ist. Durch das Federmittel wird das plattenförmige Element in radialer Richtung, zur Drehachse des Rotors hin, elastisch federbelastet. Mit anderen Worten, kann durch die während einer Drehung des Rotors auf das plattenförmige Element einwirkende Fliehkraft das plattenförmige Element in der radialen Führung, entgegen der Federkraft des Federmittels, in radialer Richtung von der Drehachse weg bewegt werden, falls die Fliehkraft so groß ist, dass die Federkraft des Federmittels überdrückt wird.

Bei einer vorteilhaften Ausgestaltung der Erfindung ist das plattenförmige Element so ausgeführt, dass es oberhalb einer vorgebbaren Drehzahl des Rotors, durch die einwirkende Fliehkraft und entgegen der Federkraft des elastischen Federmittels, eine Stellung einnehmen kann, in welcher die anziehende magnetische Wechselwirkung zwischen dem Schaltmagneten des Spulenstromschalters und dem plattenförmigen Element zu gering ist, den Schaltmagneten zu verschieben und den Spulenstromschalter zu schalten. Mit anderen Worten, das plattenförmige Element wird durch die Fliehkraft in radialer Richtung so weit von der Drehachse weg bewegt, dass sich die einander gegenüberliegenden Flächen von plattenförmigem Element und Schaltmagnet des Spulenstromschalter in der Projektion in axialer Richtung des Generators nicht mehr ausreichend überlappen, um eine Bewegung des Schaltmagneten zu bewirken und den Spulenstromschalter in seinen geschlossenen Schaltzustand zu überführen. Für das oben genannte Beispiel einer zum Bewegen des Schaltmagneten durch das plattenförmige Element in der Projektion in axialer Richtung notwendigen Überlappung der einander gegenüberliegenden Flächen von Schaltmagnet und plattenförmigem Element von 70%, heißt dies, dass durch die fliehkraftbewirkte radiale Bewegung des plattenförmige Elements oberhalb einer vorgebbaren Drehzahl des Rotors eine Überlappung von weniger als 70% vorliegt.

In technisch äußerst einfacher Weise wird hierdurch die Startvorrichtung bei der vorgebbaren Drehzahl, welche insbesondere der minimalen Startdrehzahl des Verbrennungsmotors entsprechen und beispielsweise 350 U/min betragen kann, von der Kurbelwelle des Verbrennungsmotors entkoppelt. Auf weitere, im allgemeinen kostspielige Schutzvorrichtungen zum Entkoppeln bzw. Inaktivieren der Startvorrichtung kann verzichtet werden.

Ferner ist vorteilhaft, wenn die Startspule über einen Freilaufschalter mit zwei Schaltzuständen mit einem eine Diode aufweisenden Freilaufkreis verbunden werden kann. Hierdurch kann in einfacher und kostengünstiger Weise die magnetische Energie der Startspule beim Ausschalten der hoch induktiven Ströme über den Freilaufkreis abgebaut werden. Eine etwaige Zerstörung der Schaltkontakte durch Funkenschlag kann in einfacher Weise vermieden werden. Zusätzliche Schutzvorkehrungen zu diesem Zweck sind nicht notwendig.

Vorteilhaft ist es, wenn der Freilaufschalter baugleich zum Spulenstromschalter ist und wie der Spulenstromschalter von dem plattenförmigen Element geschaltet wird. Das plattenförmige Element kann dann, durch eine Drehung des Rotors in eine Lage relativ zum Schaltmagneten des Freilaufschalters gebracht werden, bei welcher der Freilaufschalter durch die magnetische Wechselwirkung zwischen dem Schaltmagneten des Freilaufschalters und dem plattenförmigen Element geschaltet wird. Zudem ist es vorteilhaft, wenn das plattenförmige Element, oberhalb einer vorgebbaren Drehzahl des Rotors, durch die einwirkende Fliehkraft und entgegen der Federkraft des elastischen Federmittels, eine Stellung einnehmen kann, in welcher die magnetische Wechselwirkung zwischen dem Schaltmagneten des Freilaufschalters und dem plattenförmigen Element zu gering ist, den Freilaufschalter zu schalten. Diese Stellung des plattenförmigen Elements beim Freilaufschalter entspricht vorteilhaft der entsprechenden Stellung des plattenförmigen Elements beim Spulenstromschalter. Durch Betätigen des Freilaufschalters mit dem plattenförmigen Element, d. h. bei einer ausreichenden magnetischen Wechselwirkung zwischen dem Schaltmagneten des Freilaufschalters und dem plattenförmigen Element zum Verschieben des Schaltmagneten, wird der Freilaufschalter in seinen "geschlossenen" Schaltzustand überführt, d. h. die Startspule ist in diesem Schaltzustand über den Freilaufkreis kurzgeschlossen. Reicht die magnetische Wechselwirkung zwischen dem Schaltmagneten des Freilaufschalters und dem plattenförmigen Element nicht aus, den Schaltmagneten zu verschieben, so schaltet der Schaltmagnet den Freilaufschalter in seinen "offenen" Schaltzustand, in welchem die Startspule nicht über den Freilaufkreis kurzgeschlossen ist.

Vorteilhaft ist der Freilaufschalter dem Startspulenschalter in Drehrichtung des Rotors nachgeschaltet. Dies bedeutet, dass der Freilaufschalter in zeitlicher Reihenfolge nach dem Spulenstromschalter durch das plattenförmige Element geschaltet wird. In vorteilhafter Weise ist hierdurch der Freilaufschalter in seinen geschlossenen Schaltzustand geschaltet, wenn der Spulenstromschalter in seinen offenen Schaltzustand geschaltet worden ist, um die in der Startspule gespeicherte magnetische Energie abzubauen. Hierbei ist jedoch zu beachten, dass der Freilaufschalter rasch wieder geöffnet werden muss, sobald der Strom in der Startspule unterhalb eines minimalen Werts abgeklungen ist, da ansonsten durch die Bewegung der Startspule in dem Magnetfeld und den geschlossenen Freilaufkreis eine Bewegungsspannung in der Startspule induziert wird, welche einen mit hohen Verlusten verbundenen Kurzschlussstrom durch den Freilaufkreis bewirkt.

Durch die Betätigung des Freilaufschalters durch das plattenförmige Element kann der Freilaufkreis in äußerst einfacher und kostengünstiger Weise dem Stromkreis der Startspule zugeschaltet bzw. davon getrennt werden, was insbesondere bei herkömmlichen Gleichstrom-Elektromotoren ein in technischer Hinsicht äußerst schwieriges Unterfangen ist.

Bei einer Drehung des Rotors wird somit zunächst eine für den Schaltvorgang ausreichende, anziehende magnetische Wechselwirkung zwischen dem Schaltmagneten des Spulenstromschalters und dem plattenförmigen Element hergestellt und der Spulenstromschalter geschlossen, wodurch die Startspule bestromt wird. Anschließend erreicht das plattenförmige Element den Schaltmagneten des Freilaufschalters und schließt auch diesen, wodurch der Freilaufkreis geschlossen wird. Zu diesem Zeitpunkt sind somit sowohl der Spulenstromschalter als auch der Schalter des Freilaufkreises geschlossen, wobei die Diode in Sperrrichtung gepolt ist, weshalb noch kein Stromfluß über den Freilaufkreis erfolgen kann. Nach einer weiteren Drehung des Rotors, die seit Schließung des Spulenstromschalters über einen bestimmbaren Winkelbereich hinausgeht, wird der Spulenstromschalter wieder geöffnet, was zur Folge hat, dass die Startspule von der Stromquelle getrennt wird. Da der Freilaufkreis zu diesem Zeitpunkt geschlossen ist, kann die in der Startspule gespeicherte Energie des Magnetfelds nun über den Freilaufkreis abgebaut werden. Schließlich wird bei einer weiteren Drehung des Rotors, die seit Schließung des Freilaufschalters über den bestimmbaren Winkelbereich hinausgeht, der Freilaufschalters wieder geöffnet, was zur Folge hat, dass auch der Freilaufkreis wieder geöffnet wird.

In besonders vorteilhafter Weise wird durch den von der Rotordrehzahl abhängigen Betätigungszeitpunkt des Freilaufschalters die Zeitdauer, während welcher der Freilaufschalter nach Öffnen des Spulenstromschalters noch geschlossen ist, geregelt. Bei einer höheren Drehzahl des Rotors ist die Zeitdauer, während welcher der Schaltmagnet des Freilaufschalters von dem plattenförmigen Element nach Öffnen des Spulenstromschalters angezogen wird, kürzer als bei einer niedrigeren Drehzahl des Rotors. Da jedoch bei einer niedrigeren Drehzahl des Rotors mehr Strom durch die Startspule strömt als bei einer höheren Drehzahl, muss bei einer niedrigeren Rotordrehzahl auch eine größere im Magnetfeld der Startspule gespeicherte Energiemenge abgebaut werden als bei einer höheren Rotordrehzahl. Diese bei einer kleineren Rotordrehzahl im Magnetfeld der Startspule gespeicherte größere Energiemenge kann dadurch in effizienter Weise abgebaut werden, dass der Freilaufschalter bei einer niedrigen Drehzahl des Rotors nach Öffnung des Spulenstromschalters noch länger geschlossen ist als bei einer höheren Drehzahl des Rotors. Umgekehrt wird der Freilaufschalter bei einer höheren Drehzahl des Rotors schneller wieder geöffnet, wodurch die bei einer höheren Rotordrehzahl geringere im Magnetfeld der Startspule gespeicherte Energie, in effizienter Weise abgebaut werden kann. Gleichzeitig kann durch das schnellere Öffnen des Freilaufschalters bei höheren Rotordrehzahlen in vorteilhafter Weise verhindert werden, dass nach erfolgtem Abbau der magnetischen Energie der Startspule bei noch geschlossenem Freilaufkreis die Bewegungsspannung in der Startspule kurzgeschlossen wird.

In besonders vorteilhafter Weise umfasst die Startvorrichtung drei Startspulen, welche in ihren Wirkrichtungen, in Drehrichtung des Rotors betrachtet, einen Winkelabstand von jeweils 120° aufweisen, um so einen effizienten Momentenübertrag auf den Rotor des Generators zu erreichen. Hierbei ist es von Vorteil, wenn jede Startspule mit ihrem eigenen Freilaufkreis ausgerüstet ist, welcher jeweils durch einen Freilaufschalter zu der Startspule kurzgeschlossen werden kann.

Mit einer vollumfänglichen Drehung des Rotors können bei entsprechender Anordnung der jeweiligen Spulenstromschalter und Freilaufschalter und Betätigung durch das plattenförmige Element diese in zeitlicher Abfolge wie folgt betätigt werden. Zunächst werden der Spulenstromschalter der ersten Startspule und dann der zugehörige Freilaufschalter geschlossen. Anschließend werden aufeinenderfolgend der Spulenstromschalter der ersten Startspule und der Freilaufschalter der ersten Spartspule wieder geöffnet. Dann werden der Spulenstromschalter der zweiten Startspule und der Freilaufschalter der zweiten Startspule geschlossen und anschließend nacheinander wieder geöffnet. Daraufhin werden der Spulenstromschalter der dritten Startspule und dann der Freilaufschalter der dritten Startspule geschlossen. Schließlich werden diese wieder geöffnet. Auf diese Weise kann ohne herkömmlichen Kommutator eine einfache und sichere Kommutation des Ankerstroms durch phasenrichtiges Schließen und Öffnen der Spulenstromschalter, d.h. Bestromen und Unterbrechen der Startspulen, erreicht werden. Hierbei ist es besonders vorteilhaft, wenn zwei Startspulen zeitlich begrenzt gleichzeitig bestromt werden, d.h. es findet eine zeitliche Überlappung von jeweils zwei Spulenströmen statt, um zeitweilig ein summarisches Moment aus den beiden Startspulen zu erzielen und eine Momentenlücke auszuschließen.

In den vorliegend beschriebenen Ausgestaltungsformen der Erfindung wurde u.a. ausgeführt, daß die Freilaufschalter durch eine magnetische Wechselwirkung mit dem gleichen plattenförmigen Element geschalten werden wie die Spulenstromschalter. Es sei jedoch darauf hingewiesen, daß dies auch mit einem zweiten plattenförmigen Element realisiert werden kann, welches im Vergleich zu dem ersten plattenförmigen Element für die Spulenstromschalter radial gesehen weiter innen oder außen angeordnet ist. Hierzu müssen dann die Freilaufschalter eine der radialen Lage des zweiten plattenförmigen Elements entsprechende Position aufweisen. Es ist dann, z.B. durch eine unterschiedliche Geometrie der beiden plattenförmigen Elemente, auch möglich, die Schaltzeitpunkte für die Freilaufschalter gänzlich unabhängig von denen der Spulenstromschalter zu bestimmen. Beispielsweise können somit Spulenstromschalter und Freilaufschalter gleichzeitig geschlossen werden und erst aufeinanderfolgend mit zeitlicher Verzögerung wieder geöffnet werden.

Die erfindungsgemäße Startvorrichtung wird besonders bevorzugt bei einem Stromerzeuger eingebaut, welcher eine stationäre Ankerwicklung und im Rotor angeordnete Permanentmagneten zum Erregen des Generators aufweist, bei welchem der Rotor als Außenläufer das Schwungrad des Dieselmotors bildet und der Stator die Ankerwicklung trägt und innerhalb des Rotors angeordnet ist, der Rotor an einem Lüfterrad angebaut ist, welches seinerseits stirnseitig an der Kurbelwelle des Antriebsmotors angeflanscht ist, der Stator als geblechtes Eisenpaket ausgebildet ist, welches die Ankerwicklung trägt und mittels durch Bohrungen in seinem Blechpaket geführte, das Blechpaket zusammenspannende Statorschrauben mit einem Innenring eines Generatorgehäusedeckels verschraubt ist, der Rotor als geblechtes Eisenpaket ausgebildet ist, welches die Dauermagneten zur Erzeugung eines rotierenden Magnetfelds trägt und mittels durch Bohrungen in seinem Blechpaket geführte, das Blechpaket zusammenspannenden Spannschrauben mit dem Lüfterrad mehrfach am Umfang verschraubt ist. Ein derartiger Stromerzeuger ist in der deutschen Offenlegungsschrift DE 100 10 248 A1 der gleichen Anmelderin beschrieben.

Bei einer vorteilhaften Ausgestaltung der erfindungsgemäßen Startvorrichtung bei Einbau in den obigen Stromerzeuger ist der Startmagnet bzw. die Erregereinrichtung der Startvorrichtung vorzugsweise der Permanentmagnet zum Erregen des Generators, so dass auf einen von dem Permanentmagneten verschiedene Erregereinrichtung der Startvorrichtung verzichtet werden kann.

Ferner ist die wenigstens eine Startspule der Startvorrichtung in Form einer von der stationären Ankerwicklung des Generators verschiedenen Statorwicklung ausgebildet.

In technisch einfacher Weise können Spulenstromschalter und Startschalter an der Innenseite des Gehäusedeckels angeordnet sein.

Im folgenden wird eine Ausführungsform der vorliegenden Erfindung anhand der beigefügten Zeichnungen beschrieben. Darin zeigen:
- Fig. 1: eine schematische Draufsicht auf eine Ausführungsform der vorliegenden Erfindung im Längsschnitt durch den Generator des Stromerzeugers;
- Fig. 2: eine schematische Draufsicht auf eine Ausführungsform der vorliegenden Erfindung im Querschnitt gemäß Schnittführung D-D in Fig. 1 durch den Generator des Stromerzeugers in axialer Höhe der Spulenstromschalter und Freilaufschalter;
- Fig. 3: eine schematische Draufsicht auf eine Ausführungsform der vorliegenden Erfindung im Querschnitt gemäß Schnittführung C-C in Fig. 1 durch den Generator des Stromerzeugers in axialer Höhe des plattenförmigen Elements;
- Fig. 4: eine schematische Draufsicht auf einen Spulenstromschalter und einen Freilaufschalter der vorliegenden Erfindung im Längsschnitt gemäß Schnitt B-B in Fig. 2, sowie auf die radiale Führung des plattenförmigen Elements gemäß Schnitt A-A in Fig. 3;
- Fig. 5: einen Schaltplan der in den Fig. 1 bis 4 gezeigten erfindungsgemäßen Startvorrichtung.

In den Figuren sind gleiche bzw. entsprechende Elemente mit gleichen Bezugszeichen versehen.

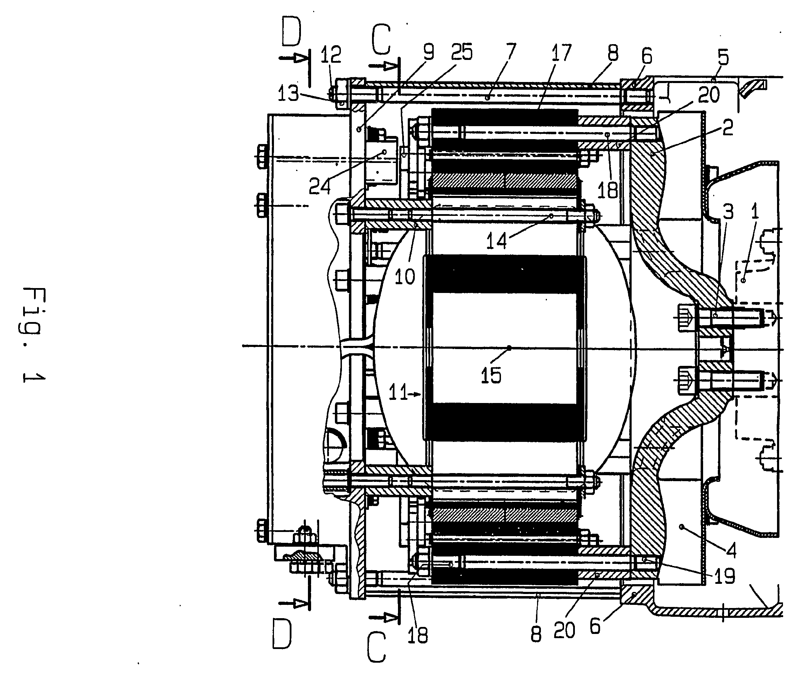

In den Figuren 1 bis 4 ist eine Ausführungsform des Stromerzeugers dargestellt. Als Antriebsmotor kommt bevorzugt ein Dieselmotor in Frage, von welchem lediglich das anschlussseitige Ende seiner Kurbelwelle 1 gestrichelt gezeichnet ist. Stirnseitig an der Kurbelwelle 1 ist ein Lüfterrad 2 mittels Schrauben 3 angebaut. Das Lüfterrad 2 besitzt eine Beschaufelung 4 zur Erzeugung eines Luftstroms zur Motor- und Generatorkühlung.

Ein motorseitiges Anschlussgehäuse 5 umschließt den Raum, in dem das Lüfterrad 2 untergebracht ist, radial nach außen; es ist zum Motor hin offen und besitzt auf seiner gegenüberliegenden Seite einen Ringflansch 6 mit Gewindebohrungen zum Eindrehen von Befestigungsschrauben 7 für den Anschluss des zylindrischen Generatorgehäuses 8, in dem dieses auf beiden Stirnseiten planflächig eingespannt wird. Die Befestigungsschrauben 7 sind an der Innenseite des Generatorgehäuses 8 über den Umfang verteilt angeordnet und durchspannen die gesamte Gehäuselänge. An dem in der Zeichnung linken Ende des Generatorgehäuses 8 ist ein Generatorgehäusedeckel 9 vorgesehen, welcher an radial nach innen ragenden Speichen einen Dekkelinnenring 10 aufweist, an dem der Stator 11 des Generators befestigt ist. Die Schäfte der Befestigungsschrauben 7 ragen durch Bohrungen in dem Generatorgehäusedeckel 9 hindurch; an ihren freien Gewindeenden 12 sind Muttern 13 aufgeschraubt, die der Befestigung des Generatorgehäusedeckel 9 am Generatorgehäuse 8 dienen.

Während über den Umfang verteilt, gemäß dem vorliegenden Ausführungsbeispiel, acht Befestigungsschrauben 7 vorgesehen sind, genügen zur Befestigung des Stators an dem Deckelinnenring 10 sechs Statorschrauben 14, welche durch Bohrungen des Blechpakets des Stators 11 hindurchgeführt und mit dem Gehäusedeckel 9 verschraubt sind. Der Stator 11 wird auf diese Weise gehäusefest fixiert, wobei das den Stator 11 bildende Blechpaket durch die Statorschrauben 14 zusammengespannt wird.

In entsprechenden Ausschnitten 16 des Blechpakets des Stators 11 sind die Wicklungsstränge der Drehstromwicklung des Generators aufgenommen.

Der Stator 11 ist umgeben vom Rotor 17, welcher ebenfalls aus einem Blechpaket aufgebaut ist, welches mittels Spannschrauben 18 zusammengespannt wird, die mit einem motorseitigen Gewindeende 19 in entsprechende Gewindebohrungen des Lüfterrads 2 eingeschraubt sind. Zwischen Lüfterrad und der zugeordneten Seite des Rotors 17 sind auf die Spannschrauben 18 aufgeschobene Stützhülsen 20 eingespannt. Damit ist der Rotor 17 drehfest mit dem Lüfterrad 2 verbunden. An seinem Innenumfang bildet er einen schmalen, ca. 2 mm breiten Luftspalt 21 gegenüber dem Stator 11. Außerdem besitzt der Rotor 17 in axialer Richtung durchgehende etwa kreisförmig innerhalb zweier Segmente verlaufende Taschen 22, in welche von beiden Seiten Magnetelemente 23 eingeschoben sind, welche für die magnetische Erregung des Generators verantwortlich sind.

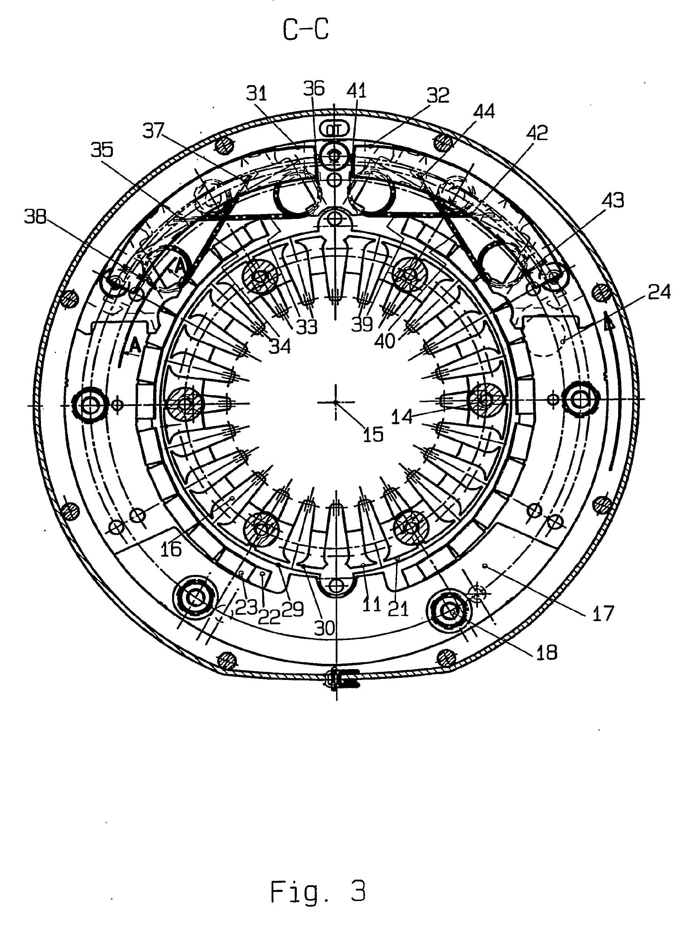

Gemäß Fig. 3 werden die Dauermagneten 23 in die Taschen 22 so eingeschoben, dass sie polygonartig verteilt dicht nebeneinander liegend die beiden Pole bilden. Durch die Unterteilung eines Pols in kleine Magnetelemente wird deren kostengünstige Herstellung ermöglicht; deren Montage wird durch einen geeigneten zeitweilig zum Zwecke der Montage erzeugten magnetischen Rückschluss sehr erleichtert. Die einzelnen Magnetelemente 23 können dann in die dafür vorgesehenen Taschen nahezu kraftlos eingeschoben werden. Dabei erübrigt sich eine besondere Befestigung der Magnetelemente 23, denn diese werden im Betrieb durch ihre Magnetkräfte in axialer Richtung gehalten und in den Taschen abgestützt, so dass sie den im Betrieb auftretenden Fliehkräften ohne weiteres standhalten.

Wie Fig. 1 zu entnehmen ist, ist ein Spulenstromschalter 24 zum Verbinden einer Startspule mit bzw. Trennen von einer Stromquelle (nicht gezeigt) an dem Gehäusedeckel 9 befestigt. Ferner ist am Rotor 17 ein plattenförmiges Element 25 drehfest angebracht, welches sich in Gegenüberstellung zu dem Spulenstromschalter 24 befindet. In der gezeigten Gegenüberstellung zwischen Spulenstromschalter 24 und plattenförmigem Element 25 liegt eine ausreichende magnetische Wechselwirkung zwischen dem Spulenstromschalter 24 und dem plattenförmigen Element 25 vor, um den Spulenstromschalter 24 in seinen geschlossenen Schaltzustand zu überführen.

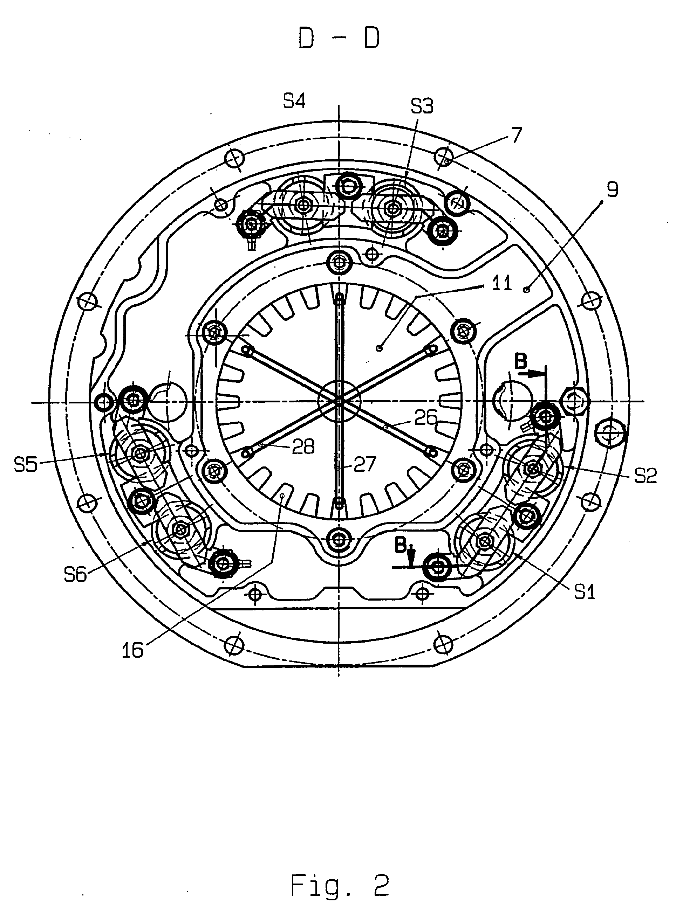

Die Ansicht gemäß Fig. 2 zeigt den Generatorgehäusedeckel 9, der mit den Befestigungsschrauben 7 über das zylindrische Generatorgehäuse 8 planflächig an dem Ringflansch 6 des Lüfter- oder Anschlußgehäuses 5 befestigt ist, wobei der axiale Schnitt durch den Generator auf Höhe der Spulenstromschalter bzw. Freilaufschalter gemäß Schnitt D-D aus Fig. 1 verläuft. Am Gehäusedeckel 9 sind die drei Spulenstromschalter S1, S3, S5 und die drei Freilaufschalter S2, S4, S6 befestigt, wobei jeweils ein Freilaufschalter neben einem Spulenstromschalter angeordnet ist. Um die Nuten 16 des Stators 11 sind drei Startspulen 26, 27, 28 gewickelt. Die drei Startspulen sind so angeordnet, dass ihre Wirkrichtungen, in Drehrichtung des Rotors betrachtet, einen Winkelabstand von jeweils 120° aufweisen. Jeder Startspule ist ein Paar von Schaltern, bestehend aus jeweils einem Spulenstromschalter und einem Freilaufschalter, zugeordnet. Die Schalterpaare sind äquidistant bezüglich des Rotorumfangs verteilt.

In Fig. 3 ist das plattenförmige Element in Form zweier Scheibensegmente 31, 32 dargestellt. Eines der beiden Scheibensegmente 31 (in der Zeichnung links gezeigt) wird durch die beiden Schenkelfedern 33, 34 in Richtung zur Drehachse 15 des Rotors hin federbelastet. Die erste Schenkelfeder 34 ist hierzu mit ihrem spiraligen Ende 38 an dem Rotor 17 befestigt, während ihr Schenkelende 37 an dem Scheibensegment 31 eingehängt ist. Die zweite Schenkelfeder 33 ist mit ihrem spiraligen Ende 36 an dem Rotor 17 befestigt, während ihr Schenkelende 35 an dem Scheibensegment 31 eingehängt ist.

Das andere der beiden Scheibensegmente 32 (in der Zeichnung rechts gezeigt) wird durch die beiden Schenkelfedern 39, 40 in Richtung zur Drehachse 15 des Rotors hin federbelastet. Die erste Schenkelfeder 39 ist hierzu mit ihrem spiraligen Ende 41 an dem Rotor 17 befestigt, während ihr Schenkelende 42 an dem Scheibensegment 32 eingehängt ist. Die zweite Schenkelfeder 40 ist mit ihrem spiraligen Ende 43 an dem Rotor 17 befestigt, während ihr Schenkelende 44 an dem Scheibensegment 32 eingehängt ist.

Die in Fig. 3 gezeigte Stellung der beiden Scheibensegmente 31, 32 entspricht einer Stellung während einer Drehung des Rotors mit einer Drehzahl oberhalb von 350 U/min. Bei dieser Drehzahl wurden die beiden Scheibensegmente 31, 32 entgegen der Federkraft ihrer jeweiligen Schenkelfedern 33, 34, 39, 40 in radialer Richtung so weit verschoben, dass keine ausreichende magnetische Wechselwirkung zwischen den Spulenstromschaltern bzw. den Freilaufschaltern und den Scheibensegmenten 31, 32 mehr vorliegt, um die Spulenstromschalter bzw. die Freilaufschalter in ihren jeweiligen geschlossenen Schaltzustand zu überführen. Ein Spulenstromschalter 24 ist gestrichelt angedeutet, so dass die Stellung der Scheibensegmente 31, 32 relativ zu den jeweiligen Schaltern deutlich wird.

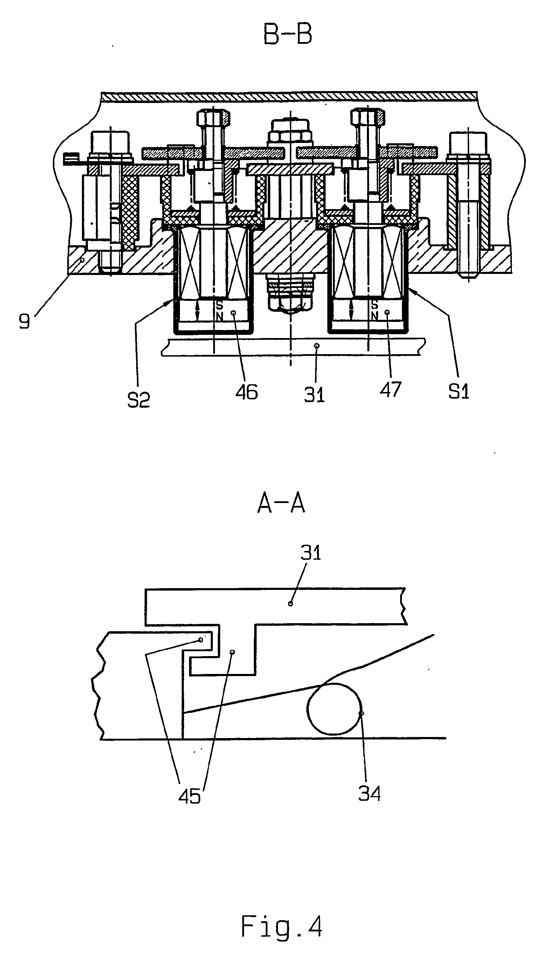

Die fliehkraftbewirkte Bewegung der beiden Scheibensegmente 31, 32 in radialer Richtung erfolgt innerhalb einer radialen Führung, welche in Fig. 4, untere Abbildung, welche einem Schnitt A-A gemäß Fig. 3 entspricht, gezeigt ist. Das plattenförmige Element 31 ist in einer U-förmigen Führung 45 geführt, welche mit einem unteren Anschlag und einem oberen Anschlag versehen ist. Das plattenförmige Element liegt hierbei dem unteren Anschlag an, wenn die Fliehkraft nicht in der Lage ist, die Federkraft der Schenkelfedern zu überdrücken. Andererseits wird das plattenförmige Element bei einer ausreichend hohen Fliehkraft gegen den oberen Anschlag gedrückt.

Die beiden Scheibensegmente 31, 32 nehmen insgesamt einen Winkelbereich von 120° ein. Unter der Voraussetzung, dass die Scheibensegmente 31, 32 die Spulenstromschalter S1, S3 und S5 in zeitlicher Abfolge nacheinander schließen, ist zunächst die erste Wicklung 26 bestromt und somit momentbildend, 120° später ist die zweite Wicklung 27 bestromt und somit momentbildend und weitere 120° später ist die dritte Wicklung 28 bestromt und somit momentbildend. Da jede der Startspulen 26, 27, 28 für sich betrachtet bei Bestromung für einen Winkelbereich von 180° ein positives Moment ausbildet, folgt hieraus, dass für einen Überschneidungsbereich von 60° jeweils 2 Startspulen gemeinsam momentbildend sein können. Beginnt also beispielsweise die erste Startspule 26 bei einem Referenzwinkel 0° ein Moment in positive Richtung zu entwickeln, so beginnt bereits 120° später auch die zweite Startspule 27 ein Moment in positive Richtung zu entwickeln, während die erste Startspule 26 insgesamt für 180° positiv momentbildend ist, so dass für den Winkelbereich von 120° bis 180° die erste Startspule 26 und die zweite Startspule 27 zusammen in positive Richtung momentbildend sind. Diese Momentüberhöhung kann in vorteilhafter Weise für die Überwindung einer hohen Kompressionsarbeit, etwa bei einem Dieselmotor, eingesetzt werden und stellt sicher, daß bei Stromübergabe von Wicklung 26 auf Wicklung 27 keine Strom- bzw. Momentenlücke entsteht.

In Fig. 4, obere Abbildung ist ein Paar bestehend aus einem Spulenstromschalter S1 und einem Freilaufschalter S2, im Längsschnitt B-B gemäß Fig. 2 gezeigt, welche am Gehäusedeckel 9 befestigt sind. Der Spulenstromschalter S1 ist in der gleichen Weise aufgebaut wie der Freilaufschalter S2, d. h. Spulenstromschalter und Freilaufschalter sind baugleich. Beide Schalter sind mit einem Schaltmagneten 46, 47 ausgerüstet, welcher in den angegeben Richtungen der Wechselpfeile entgegen einer rückstellenden Kraft verschoben werden kann, wodurch die Schalter geschaltet werden. Übt das Scheibensegment eine ausreichende magnetische Wechselwirkung auf die Schaltmagneten aus, so wird der Schaltmagnet 47 des Spulenstromschalters S1 und der Schaltmagnet 46 des Freilaufschalters S2 von dem Scheibensegment angezogen und (in Fig. 4 nach unten) bewegt, wodurch die Schalter in ihren jeweiligen geschlossenen Schaltzustand überführt werden. Bei entsprechender Anordnung der beiden Schalter relativ zur Drehrichtung des Rotors, wird zunächst der Spulenstromschalter und anschließend der Freilaufschalter geschaltet.

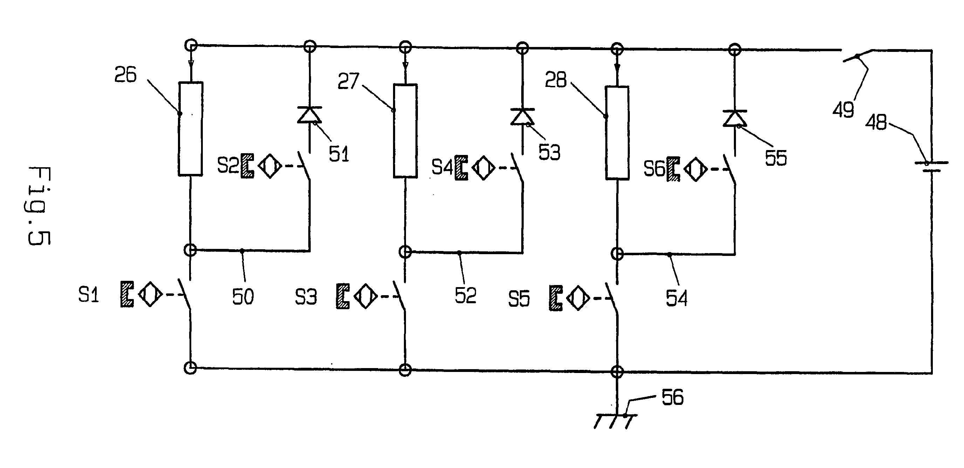

Fig. 5 zeigt einen Schaltplan der in den Figuren 1 bis 4 dargestellten erfindungsgemäßen Startvorrichtung. Wie dem Schaltplan zu entnehmen ist, können die drei Spulen 26, 27, 28 mit einer Stromquelle 48 verbunden werden. Um die Startvorrichtung in Betrieb zu nehmen, muss zunächst ein Hauptschalter 49 geschlossen werden. Um bei geschlossenem Hauptschalter 49 die erste Spule 26 mit der Stromquelle 48 zu verbinden, muss der der ersten Spule 26 nachgeschaltete Spulenstromschalter S1 geschlossen werden. Um bei geschlossenem Hauptschalter 49 die zweite Spule 27 mit der Stromquelle 48 zu verbinden, muss der der zweiten Spule 27 nachgeschaltete Spulenstromschalter S3 geschlossen werden. Um bei geschlossenem Hauptschalter 49 die dritte Spule 28 mit der Stromquelle 48 zu verbinden, muss der der dritten Spule 28 nachgeschaltete Spulenstromschalter S5 geschlossen werden. Der Schaltkreis ist zudem mit Masse 56 verbunden.

Die erste Spule 26 kann mit dem ersten Freilaufkreis 50, welcher eine Diode 51 aufweist, verbunden werden. Hierzu muss lediglich der Freilaufschalter S2 geschlossen werden. Ebenso kann die zweite Spule 27 mit dem zweiten Freilaufkreis 52, welcher eine Diode 53 aufweist, verbunden werden. Hierzu muss lediglich der Freilaufschalter S4 geschlossen werden. In gleicher Weise kann die dritte Spule 28 mit dem dritten Freilaufkreis 54, welcher eine Diode 55 aufweist, verbunden werden. Hierzu muss lediglich der Freilaufschalter S6 geschlossen werden.

## Patentansprüche

1. Startvorrichtung für einen Stromerzeuger als Einheit aus Verbrennungsmotor und Generator, bei welchem der Rotor (17) des Generators mit der Kurbelwelle (1) des Verbrennungsmotors drehfest gekoppelt ist, wobei die Startvorrichtung wenigstens eine auf dem einen von Rotor (17) oder Stator (11) des Generators angeordnete Startspule (26, 27, 28), und wenigstens einen auf dem anderen von Rotor (17) oder Stator (11) angeordneten, mit einem Spulenmagnetfeld der bestromten Startspule (26, 27, 28) momentbildend zusammenwirkenden Startmagneten umfasst,
**dadurch gekennzeichnet,**
**dass** die Startvorrichtung ferner wenigstens einen stationären Spulenstromschalter (S1, S3, S5) mit zwei Schaltzuständen zum Verbinden der Startspule (26, 27, 28) mit oder Trennen der Startspule (26, 27, 28) von einer Stromquelle, und wenigstens ein auf dem Rotor (17) drehfest angeordnetes Schalterbetätigungsmittel, welches mit dem Spulenstromschalter (S1, S3, S5) magnetisch zusammenwirkt und geeignet ist, den Spulenstromschalter (S1, S3, S5) in Abhängigkeit von der Rotorwinkellage in einen seiner beiden Schaltzustände zu schalten, umfasst.

2. Startvorrichtung nach Anspruch 1,
**dadurch gekennzeichnet,**
**dass** das Schalterbetätigungsmittel geeignet ist, gleichzeitig mehrere, insbesondere zwei, Spulenstromschalter (S1, S3, S5) in einen einander entsprechenden Schaltzustand zu schalten.

3. Startvorrichtung nach Anspruch 1 oder 2,
**dadurch gekennzeichnet,**
**dass** der Spulenstromschalter (S1) mit einem entgegen einer rückstellenden Kraft verschiebbaren Schaltmagneten (47) ausgerüstet ist, durch dessen Verschiebung der Spulenstromschalter (S1) geschaltet wird, wobei der Schaltmagnet (47) geeignet ist, mit einem Schalterbetätigungsmittel in Form eines plattenförmigen Elements (25) aus einem magnetischen oder ferromagnetischen Material, insbesondere Eisen, zu dessen Verschiebung zusammenzuwirken.

4. Startvorrichtung nach Anspruch 3,
**dadurch gekennzeichnet,**
**dass** das plattenförmige Element (25) in Form wenigstens eines Scheibensegments (31) vorliegt.

5. Startvorrichtung nach Anspruch 3 oder 4,
**dadurch gekennzeichnet,**
**dass** der Rotor (17) eine radiale Führung (45) für das plattenförmige Element (25) aufweist.

6. Startvorrichtung nach einem der Ansprüche 2 bis 4,
**dadurch gekennzeichnet,**
**dass** der Rotor (17) mit wenigstens einem elastischen Federmittel (33; 34) ausgerüstet ist, welches mit seinem einen Ende am Rotor und mit seinem anderen Ende an dem plattenförmige Element (25) befestigt ist, wodurch das plattenförmige Element (25) in radialer Richtung, zur Drehachse des Rotors (17) hin, elastisch federbelastet ist.

7. Startvorrichtung nach Anspruch 6,
**dadurch gekennzeichnet,**
**dass** das plattenförmige Element (25) oberhalb einer vorgebbaren Drehzahl des Rotors (17) durch die einwirkende Fliehkraft eine Stellung einnehmen kann, in welcher der Schaltmagnet (47) des Spulenstromschalters (S1) durch die magnetische Wechselwirkung mit dem plattenförmigen Element (25) nicht verschoben werden kann.

8. Startvorrichtung nach einem der vorhergehenden Ansprüche,
**dadurch gekennzeichnet,**
**dass** eine Starterspule (26) über einen Freilaufschalter (S2) mit zwei Schaltzuständen mit einem eine Diode (51) aufweisenden Freilaufkreis verbunden werden kann.

9. Startvorrichtung nach Anspruch 8,
**dadurch gekennzeichnet,**
**dass** der Freilaufschalter (S2) mit einem entgegen einer rückstellenden Kraft verschiebbaren Schaltmagneten (46) ausgerüstet ist, durch dessen Verschiebung der Freilaufschalter (S2) geschaltet wird, wobei der Schaltmagnet (46) geeignet ist, mit dem Schalterbetätigungsmittel in Form eines plattenförmigen Elements (25) aus einem magnetischen oder ferromagnetischen Material, insbesondere Eisen, zu dessen Verschieben zusammenzuwirken.

10. Startvorrichtung nach Anspruch 9,
**dadurch gekennzeichnet,**
**dass** das plattenförmige Element (25) oberhalb einer vorgebbaren Drehzahl des Rotors (17) durch die einwirkende Fliehkraft eine Stellung einnehmen kann, in welcher der Schaltmagnet (46) des Freilaufschalters (S2) durch die magnetische Wechselwirkung mit dem plattenförmigen Element (25) nicht verschoben werden kann.

11. Startvorrichtung nach einem der vorhergehenden Ansprüche 8 bis 10,
**dadurch gekennzeichnet,**
**dass** der Freilaufschalter (S2) dem Startspulenschalter (S1) in Drehrichtung des Rotors (17) nachgeschaltet ist.

12. Startvorrichtung nach einem der vorhergehenden Ansprüche,
**dadurch gekennzeichnet,**
**dass** sie drei Startspulen (26, 27, 28) umfasst, welche in ihren Wirkrichtungen, in Drehrichtung des Rotors (17) betrachtet, einen Winkelabstand von jeweils 120° aufweisen.

13. Startvorrichtung nach einem der vorhergehenden Ansprüche, für einen Stromerzeuger, welcher
- eine stationäre Ankerwicklung und im Rotor (17) angeordnete Permanentmagneten (23) zum Erregen des Generators aufweist,
- der Rotor (17) als Außenläufer das Schwungrad des Dieselmotors bildet und der Stator (11) die Ankerwicklung trägt und innerhalb des Rotors (17) angeordnet ist,
- der Rotor (17) an einem Lüfterrad (2) angebaut ist, welches seinerseits stirnseitig an der Kurbelwelle (1) des Antriebsmotors angeflanscht ist,
- der Stator (11) als geblechtes Eisenpaket ausgebildet ist, welches die Ankerwicklung trägt und mittels - durch Bohrungen in seinem Blechpaket geführte, das Blechpaket zusammenspannende Statorschrauben (14) mit einem Innenring (10) eines Generatorgehäusedeckels (9) verschraubt ist,
- der Rotor (17) als geblechtes Eisenpaket ausgebildet ist, welches die Dauermagneten (23) zur Erzeugung eines rotierenden Magnetfelds trägt und mittels durch Bohrungen in seinem Blechpaket geführte, das Blechpaket zusammenspannenden Spannschrauben (18) mit dem Lüfterrad (2) mehrfach am Umfang verschraubt ist.

14. Startvorrichtung nach Anspruch 13,
**dadurch gekennzeichnet,**
**dass** der Startmagnet der Startvorrichtung der Permanentmagnet zum Erregen des Generators ist.

15. Startvorrichtung nach Anspruch 13 oder 14,
**dadurch gekennzeichnet,**
**dass** die wenigstens eine Startspule (26) in Form einer von der stationären Ankerwicklung des Generators verschiedenen Statorwicklung ausgebildet ist.

16. Startvorrichtung nach einem der Ansprüche 13 bis 15,
**dadurch gekennzeichnet,**
**dass** Spulenstromschalter (S1) und Freilaufschalter (S2) an der Innenseite des Gehäusedeckels (9) angeordnet sind.

## Claims

1. A starting device for a current generator as a unit composed of ICE and generator, in which the rotor (17) of the generator is connected to the crank shaft (1) of the ICE in a rotationally fixed manner, wherein the starting device comprises at least one starting coil (26, 27, 28) arranged on either the rotor (17) or the stator (11), and at least one starting magnet which is arranged on the other rotor (17) or stator (11) and co-operates with a torque-building magnetic field of the starting coil (26, 27, 28) through which a current passes,
**characterised in that**
the starting device furthermore comprises at least one fixed coil current switch (S1, S3, S5) having two switching states for connecting the starting coil (26, 27, 28) to a current source or separating the starting coil (26, 27, 28) from a current source, and at least one switch actuating means which is arranged on the rotor (17) in a rotationally fixed manner, magnetically co-operates with the coil current switch (S1, S3, S5), and is used to switch the coil current switch (S1, S3, S5) into one of its two switching states according to the angular position of the rotor.

2. The starting device as specified in claim 1,
**characterised in that**
the switch actuating means is suited to switch simultaneously a plurality of, in particular two, coil current switches (S1, S3, S5) into a corresponding switching state.

3. The starting device as specified in claim 1 or claim 2,
**characterised in that**
the coil current switch (S1) is equipped with a switching magnet (47) that can be displaced against a resettable force, the coil current switch (S1) being set by means of the displacement of said switching magnet, wherein the switching magnet (47) is suitable for co-operating in its displacement with a switch actuating means in the form of a plate-shaped element (25) composed of magnetic or ferromagnetic material, iron in particular.

4. The starting device as specified in claim 3,
**characterised in that**
the plate-shaped element (25) is present in the form of at least one disc segment (31).

5. The starting device as specified in claim 3 or claim 4,
**characterised in that**
the rotor (17) has a radial guide (45) for the plate-shaped element (25).

6. The starting device as specified in any one of claims 2 to 4,
**characterised in that**
the rotor (17) is equipped with at least one elastic spring means (33, 34) that is attached with its one end to the rotor and with its other end to the plate-shaped element (25) by means of which the plate-shaped element (25) is elastically spring loaded in the radial direction to the axis of rotation of the rotor (17).

7. The starting device as specified in claim 6,
**characterised in that**
the plate-shaped element (25) can, above a predeterminable number of revolutions of the rotor (17), assume a position by means of the centrifugal force that is influencing it, in which position the switching magnet (47) of the coil current switch (S1) cannot be displaced by means of the magnetic interaction with the plate-shaped element (25).

8. The starting device as specified in any one of the preceding claims,
**characterised in that**
a starting coil (26) can be connected to a free-wheeling circuit that has a diode (51) by means of a free-wheeling switch (S2) having two switching states.

9. The starting device as specified in claim 8,
**characterised in that**
the free-wheeling switch (S2) is equipped with a switching magnet (46) that can be displaced against a resettable force, the free-wheeling switch (S2) being set by means of the displacement of said switching magnet, wherein the switching magnet (46) is suitable for co-operating in its displacement with a switch actuating means in the form of a plate-shaped element (25) composed of magnetic or ferromagnetic material, iron in particular.

10. The starting device as specified in claim 9,
**characterised in that**
the plate-shaped element (25) can, above a predeterminable number of revolutions of the rotor (17), assume a position by means of the centrifugal force that is influencing it, in which position the switching magnet (46) of the free-wheeling switch (S2) cannot be displaced by means of the magnetic interaction with the plate-shaped element (25).

11. The starting device as specified according to any one of the preceding claims 8 to 10,
**characterised in that**
the free-wheeling switch (S2) is connected after the starting coil switch (S1) in the direction of rotation of the rotor (17).

12. The starting device as specified in any one of the preceding claims,
**characterised in that**
it comprises three starting coil (26, 27, 28) that, in their direction of action and regarded from the direction of rotation of the rotor (17) have an angular distance of 120° respectively.

13. The starting device as specified in any one of the preceding claims, for a for a current generator that
- has a stationary armature winding and permanent magnets arranged in the rotor (17) in order to excite the generator,
- the rotor (17) as external rotor forms the flywheel of the diesel engine and the stator (11) supports the armature winding and is arranged within the rotor (17),
- the rotor (17) is mounted on a fan wheel (2) that itself is flange mounted on its front face to the crank shaft (1) of the drive motor,
- the stator (11) is designed as a laminated stator that supports the armature winding and, by means of stator screws (14) that are guided through bore holes in the laminations of said stator and tension the laminations together, is screwed together with an inner ring (10) of a generator housing cover (9),
- the rotor (17) is designed as a laminated stator that supports the permanent magnets (23) for generating a rotating magnetic field and, by means of tensioning screws (18) that are guided through bore holes in the laminations of said rotor and tension the laminations together, is screwed together with the fan wheel (2) multiple times on its periphery.

14. The starting device as specified in claim 13,
**characterised in that**
the starting magnet of the starting device is the permanent magnet for exciting the generator.

15. The starting device as specified in claim 13 or claim 14,
**characterised in that**
the at least one starting coil (26) is designed in the form of a stator winding that is different from the stationary armature winding of the generator.

16. The starting device as specified in one of claims 13 to 15,
**characterised in that**
a coil current switch (S1) and a free-wheeling switch (S2) are arranged on the interior side of the housing cover (9).

## Revendications

1. Dispositif de démarrage pour générateur de courant se présentant sous forme d'unité constituée d'un moteur à combustion interne et d'une génératrice, dans lequel le rotor (17) du générateur est couplé de manière solidaire en rotation au vilebrequin (1) du moteur à combustion interne, moyennant quoi le dispositif de démarrage comprend au moins une bobine de démarrage (26, 27, 28) disposée sur l'un du rotor (17) ou du stator (11) du générateur, et au moins un aimant de démarrage disposé sur l'autre du rotor (17) ou du stator (11), coopérant en formant un couple avec un champ magnétique de bobine de la bobine de démarrage (26, 27, 28) mise sous tension,
**caractérisé en ce que**
le dispositif de démarrage comprend en outre un interrupteur de courant de bobine (S1, S3, S5) stationnaire comportant deux états de commutation afin de relier la bobine de démarrage (26, 27, 28) avec ou séparer la bobine de démarrage (26, 27, 28) d'une source de courant, et au moins un moyen d'actionnement d'interrupteur disposé de manière solidaire en rotation sur le rotor (17), lequel coopère magnétiquement avec l'interrupteur de courant de bobine (S1, S3, S5) et est approprié afin de commuter l'interrupteur de courant de bobine (S1, S3, S5) en fonction de la position angulaire du rotor dans un de ses deux états de commutation.

2. Dispositif de démarrage selon la revendication 1,
**caractérisé en ce que**
le moyen d'actionnement d'interrupteur est approprié, afin de commuter simultanément plusieurs, notamment deux, interrupteurs de courant de bobine (S1, S3, S5) en un état de commutation correspondant.

3. Dispositif de démarrage selon la revendication 1 ou 2,
**caractérisé en ce que**
l'interrupteur de courant de bobine (S1) est équipé d'un électro-aimant de commande (47) déplaçable en sens contraire à une force de rappel, par le déplacement duquel l'interrupteur de courant de bobine (S1) est activé, moyennant quoi l'électro-aimant de commande (47) est approprié afin de coopérer avec un moyen d'actionnement d'interrupteur se présentant sous forme d'un élément en forme de plaque (25) constitué d'un matériau magnétique ou ferromagnétique, notamment du fer, en vue du déplacement de celui-ci.

4. Dispositif de démarrage selon la revendication 3,
**caractérisé en ce que**
l'élément en forme de plaque (25) se présente sous la forme d'au moins un segment de disque (31).

5. Dispositif de démarrage selon la revendication 3 ou 4,
**caractérisé en ce que**
le rotor (17) présente une coulisse radiale (45) destinée à l'élément en forme de plaque (25)

6. Dispositif de démarrage selon une des revendications 2 à 4,
**caractérisé en ce que**
le rotor (17) est équipé d'au moins un moyen de ressort élastique (33 ; 34), qui est fixé par une de ses extrémités au rotor et par l'autre de ses extrémités à l'élément en forme de plaque (25), moyennant quoi l'élément en forme de plaque (25) est élastiquement chargé par ressort dans la direction radiale, en allant vers l'axe de rotation du rotor (17).

7. Dispositif de démarrage selon la revendication 6,
**caractérisé en ce que**
l'élément en forme de plaque (25) peut adopter une position au dessus d'une vitesse de rotation du rotor (17) pouvant être prescrite du fait de la force centrifuge s'exerçant, position dans laquelle l'électro-aimant de commande (47) de l'interrupteur de courant de bobine (S1) ne peut pas être déplacé du fait de l'interaction magnétique avec l'élément en forme de plaque (25).

8. Dispositif de démarrage selon une des revendications précédentes,
**caractérisé en ce que**
une bobine de démarreur (26) peut être reliée par l'intermédiaire d'un interrupteur à roue libre (S2) comportant deux états de commutation avec un circuit en roue libre présentant une diode (51).

9. Dispositif de démarrage selon la revendication 8,
**caractérisé en ce que**
l'interrupteur à roue libre (S2) est équipé d'un électro-aimant de commande (46) déplaçable en sens contraire à un force de rappel, par le déplacement duquel l'interrupteur à roue libre (S2) est activé, moyennant quoi l'électro-aimant de commande (46) est approprié afin de coopérer avec le moyen d'actionnement d'interrupteur se présentant sous la forme d'un élément en forme de plaque (25) constitué d'un matériau magnétique ou ferromagnétique, notamment du fer, en vue du déplacement de celui-ci.

10. Dispositif de démarrage selon la revendication 9,
**caractérisé en ce que**
l'élément en forme de plaque (25) peut adopter une position au dessus d'une vitesse de rotation du rotor (17) pouvant être prescrite du fait de la force centrifuge s'exerçant, position dans laquelle l'électro-aimant de commande (46) de l'interrupteur à roue libre (S2) ne peut pas être déplacé par l'interaction magnétique avec l'élément en forme de plaque (25).

11. Dispositif de démarrage selon une des revendications 8 à 10 précédentes,
**caractérisé en ce que**
l'interrupteur à roue libre (S2) est branché en aval de l'interrupteur de bobine de démarrage (S1) dans la direction de rotation du rotor (17).

12. Dispositif de démarrage selon une des revendications précédentes,
**caractérisé en ce que**
il comprend trois bobines de démarrage (26, 27, 28), lesquelles présentent dans leurs directions opérationnelles, vu dans la direction de rotation du rotor (17), un espacement angulaire de respectivement 120°.

13. Dispositif de démarrage pour générateur de courant selon une des revendications précédentes, lequel
- présente une spire d'ancrage stationnaire et des aimants permanents (23) disposés dans le rotor (17) en vue de l'excitation du générateur,
- le rotor (17) en tant que rotor extérieur forme le volant d'inertie du moteur diesel et le stator (11) supporte la spire d'ancrage et est disposé à l'intérieur du rotor (17),
- le rotor (17) est monté sur une roue de soufflante (2), laquelle est de son côté raccordée par bride du côté frontal au vilebrequin (1) du moteur d'entraînement,
- le stator (11) est configuré comme un empilage de tôles de fer, qui support la spire d'ancrage et est vissé au moyen de vis de stator (14) introduites à travers des alésages dans son empilage de tôles, serrant conjointement l'empilage de tôle à un anneau intérieur (10) d'un couvercle de logement de générateur (9),
- le rotor (17) est configuré comme un empilage de tôles de fer, qui supporte les aimants permanents (23) afin de générer un champ magnétique rotatif et est vissé à plusieurs reprises sur sa circonférence au moyen de vis de serrage (18) introduites à travers des alésages dans son empilage de tôles, serrant conjointement l'empilage de tôles à la roue de soufflante (2).

14. Dispositif de démarrage selon la revendication 13,
**caractérisé en ce que**
l'aimant de démarrage est le dispositif de démarrage de l'aimant permanent afin d'exciter le générateur.

15. Dispositif de démarrage selon la revendication 13 ou 14,
**caractérisé en ce que**
la au moins une bobine de démarrage (26) est configuré sous forme d'une spire de stator différente de la spire d'ancrage stationnaire du générateur.

16. Dispositif de démarrage selon une des revendications 13 à 15,
**caractérisé en ce que**
l'interrupteur de courant de bobine (S1) et l'interrupteur à roue libre (S2) sont disposés sur le côté intérieur du couvercle de logement (9).
